# EUROPEAN PATENT APPLICATION

(11) **EP 1 333 657 A1**
(43) Date of publication of application: **06.08.2003**
(21) Application number: 00974917.7
(22) Date of filing: 10.11.2000
(51) Int. Cl.: H04N 1/32, H04N 1/00

(54) **SOUND/FACSIMILE SIGNAL TRANSMISSION METHOD AND SOUND/FACSIMILE SIGNAL TRANSMISSION DEVICE**

(71) Applicant: MITSUBISHI DENKI KABUSHIKI KAISHA, Tokyo 100-8310 (JP)
(72) Inventor: HARADA, Yoshihisa, Mitsubishi Denki K.K., Tokyo 100-8310 (JP)
(74) Representative: Bohnenberger, Johannes, Dr.
(86) International application number: JP0007946
(87) International publication number: WO02039722

(57) **Abstract**

The invention concerns a speech-facsimile signal transmission method and a speech-facsimile signal transmission system that permit efficient transmission of speech and facsimile signals. With the provision of a first signal decision step of deciding whether a control signal added to a speech-facsimile signal is a T.30-defined nonstandard function setting signal and a second signal decision step of deciding whether the control signal is a predetermined control signal, it is possible to perform signal transmission of facsimile terminal having an original control protocol.

## Description

### TECHNICAL FIELD

The present invention relates to a speech-facsimile signal transmission method and a speech-facsimile signal transmission system that permit efficient transmission of speech and facsimile signals.

### BACKGROUND ART

DCME (Digital Circuit Multiplication Equipment) or the like employ a facsimile demodulated transmission scheme for efficient transmission of facsimile signals. This scheme is one that once demodulates a modem-modulated signal output from a facsimile terminal, transmits it as demodulated data over a transmission line and, in a destination apparatus, re-modulates the transmitted data and then outputs it. The modem-modulated signal that is output from the facsimile signal falls into a V. 21/300 bps signal for communication control use and a fast modem-modulated signal (for example, V. 17/14.4 kbps) for original image transmission use. For the demodulated transmission by DCME as mentioned above, it is necessary to choose an appropriate modem according to the signal to be sent. A typical method is to monitor, for example, the ITU-T T. 30-defined facsimile communication control protocol.

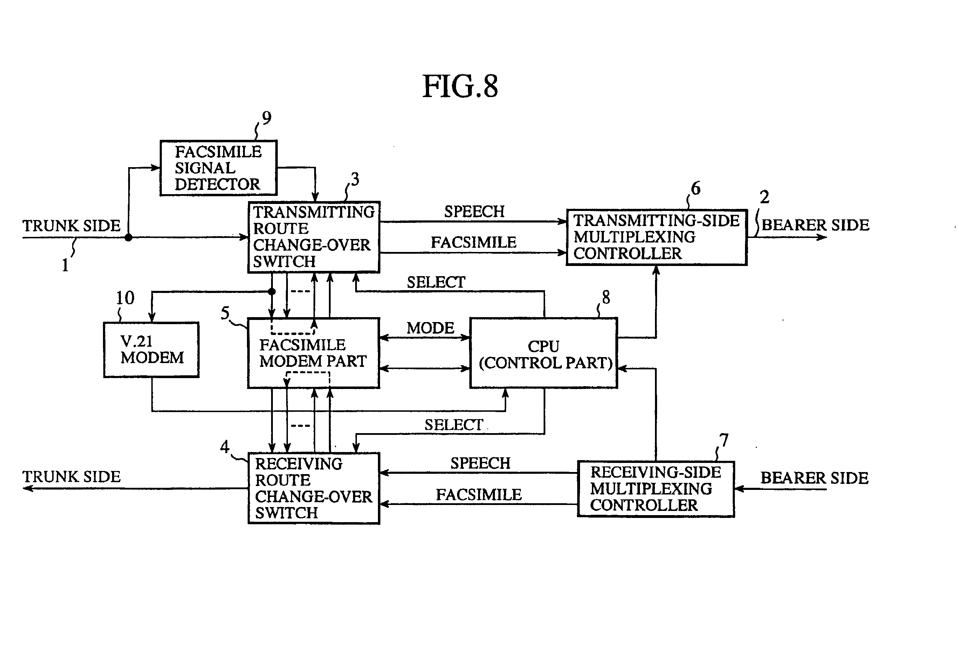

Fig. 8 is a block diagram illustrating an example of a conventional facsimile signal transmission system set forth in Pat. Appln. Laid-Open Gazette 46495/97. In Fig. 8, reference numeral 1 denotes a trunk-side input signal line for the input of a speech signal and a modem-modulated signal from a facsimile terminal; 2 denotes a bearer-side output signal line over which to transmit a demodulated signal from this apparatus; 3 denotes a transmitting route change-over switch; and 4 denotes a receiving route change-over switch. Reference numeral 5 denotes a facsimile a facsimile modulator/demodulator part (hereinafter referred to as a " facsimile modem part") that demodulates a modem-modulated signal input from the trunk-side input signal line 1 and modulates a demodulated facsimile signal input from the bearer side. Reference numeral 6 denotes a transmitting-side multiplexing controller that multiplexes the demodulated facsimile signal from the facsimile modem part 5 and other signals such as a speech signal and a data signal for sending to the bearer side; and 7 denotes a receiving-side multiplexing controller that separates the facsimile signal from a multiplexed signal send from the bearer side, the separated facsimile signal being provided via the receiving route change-over switch 4 to the facsimile modem part 5. Reference numeral 8 denotes a CPU that constitutes a control part for controlling the entire system; 9 denotes a facsimile signal detector for detecting a facsimile signal; and 10 denotes a V. 21 modem for demodulating a communication control signal.

Next, a description will be given of the demodulated transmission control in the conventional facsimile signal transmission apparatus. The transmitting side will be described first. A speech-facsimile signal on the trunk-side speech-facsimile signal input line, which is a mixture of speech and facsimile signals, is input to the facsimile signal detector 9 and the transmitting route change-over switch 3. The facsimile signal detector 9 makes a check to determine whether the input signal is a facsimile signal, and outputs the check result to the transmitting route change-over switch 3. Based on the check result, the transmitting route change-over switch 3 provides the input signal intact to the transmitting-side multiplexing controller 6 or to the facsimile modem part 5, depending on whether the input signal is a speech or facsimile signal. The facsimile modem part 5 demodulates the modem-modulated signal and applies the demodulated signal to the transmitting route change-over switch 3. The transmitting route change-over switch 3 outputs the demodulated facsimile base band data and facsimile signal to the transmitting-side multiplexing controller 6. The transmitting-side multiplexing controller 6 multiplexes the demodulated facsimile signal from the facsimile modem part 5 and other signals such as speech and data signals, and sends the multiplexed signal to the bearer side.

Next, the receiving side will be described below. At the receiving side, the signal received from the bearer side is provided via the receiving-side multiplexing controller 7 to the receiving route change-over switch 4. The receiving-side multiplexing controller 7 separates a facsimile signal from the multiplexed signal sent from the bearer side. The facsimile signal is sent by the receiving route change-over switch 4 to the facsimile modem part 5. The facsimile modem part 5 modulates the facsimile signal and outputs it to the receiving route change-over switch 4. The receiving route change-over switch 4 outputs to the trunk side the facsimile signal from the facsimile modem part 5 for the channel currently busy for facsimile communication and signals from a speech route for the other channels.

The above flow of the facsimile signal is in the case of using a standard protocol. A typical method is one that monitors the ITU-T T.30-defined facsimile communication control protocol and determines whether the facsimile signal is based on the standard protocol, thereby performs demodulated transmission control using the facsimile modem part.

However, some facsimile terminals optionally adopt protocols original to facsimile-equipment makers. In the case of using the original protocol, facsimile transmission between facsimiles of the same maker can be accomplished using the original protocol, but since original protocols are not made public in general, it is impossible to perform facsimile demodulated transmission using the original protocol.

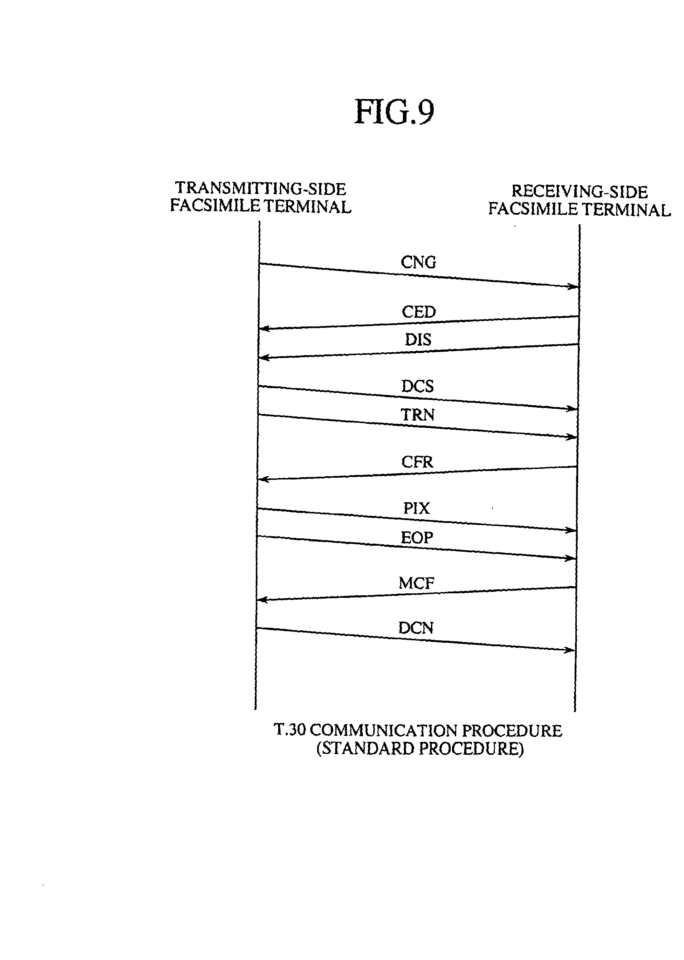

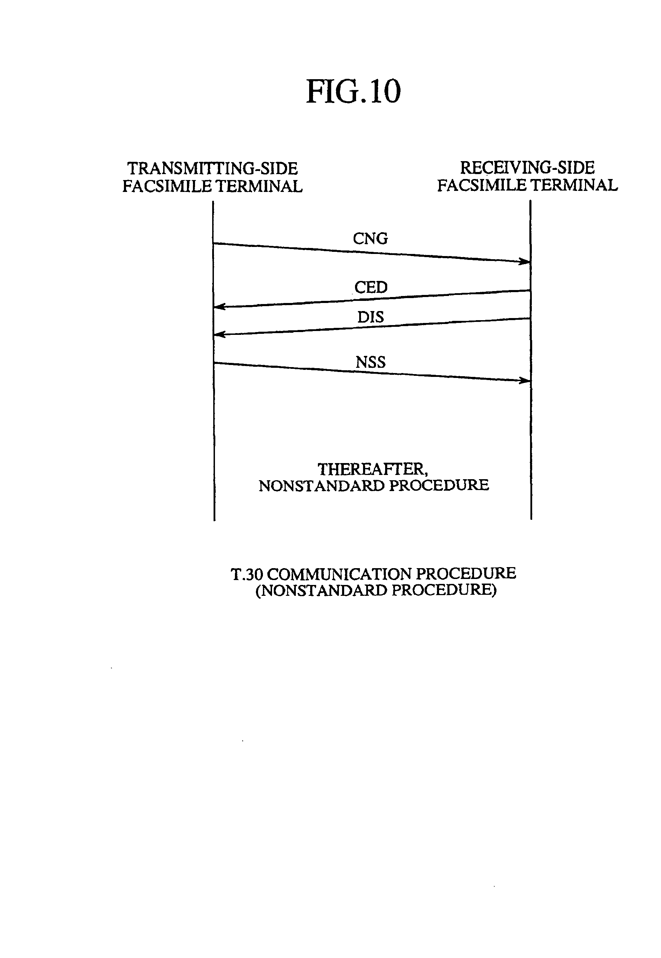

Fig. 9 is a schematic diagram for explaining the ITU-T T.30-defined facsimile communication control procedure. Fig. 10 is a schematic diagram showing a facsimile communication control procedure that does not belong to the above-mentioned definition but is original to a facsimile-equipment maker.

The ITU-T T.30-defined facsimile communication control procedure (standard procedure) will be described with reference to Fig. 9. In the case where transmitting-side facsimile equipment sends a facsimile signal (command) to receiving-side facsimile equipment, the latter answers a CNG (Calling Tone) signal by sending a CED (Called Station Identification) signal, and then sends a DIS (Digital Identification Signal) signal to the transmitting-side facsimile equipment. In the standard procedure, the transmitting-side facsimile equipment sends a DCS (Digital Command Signal) signal and then a TRN (Training) signal. The receiving-side facsimile equipment answers with a CFR (Confirmation to Receive) signal. Thereafter, the transmitting-side facsimile equipment sends PIX (Pixel) data, then the receiving-side facsimile equipment answers an EOP (End of Procedure) signal with an MCF (Message Confirmation) signal, and a series of steps for transmission ends with a DCN (Disconnect) signal from the transmitting-side facsimile equipment.

A description will be given, with reference to Fig. 10, of an example of the procedure for facsimile communication control original to a facsimile-equipment maker. The procedure is common to the Fig. 9 standard procedure in the steps until the digital identification signal DIS is sent to the calling part. Thereafter, the transmitting side sends a nonstandard function setting signal NSS indicating the start of the original protocol, after which communications are carried out using the nonstandard original protocol.

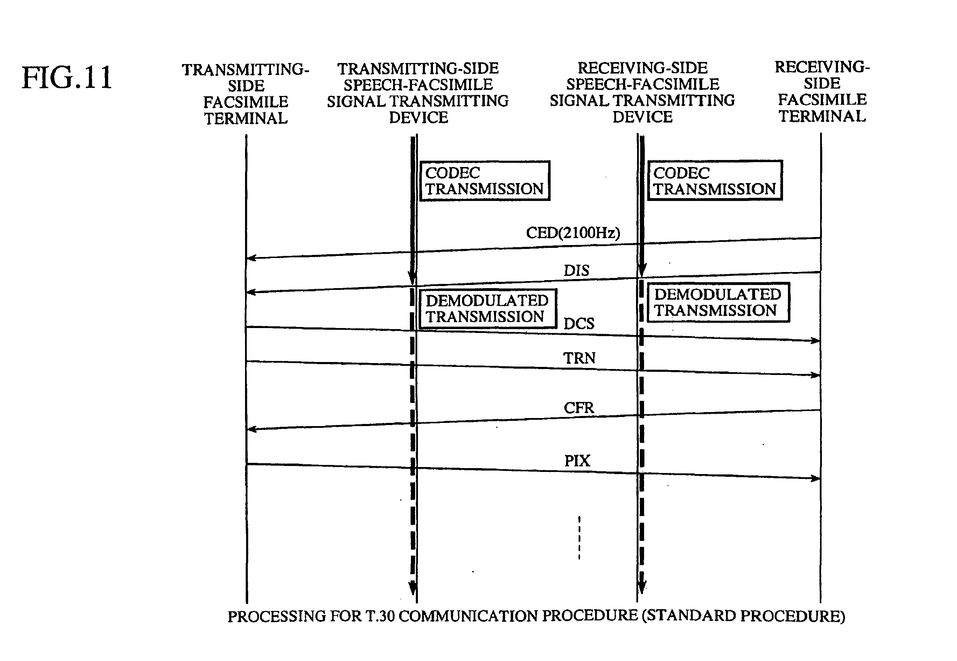

The conventional transmission system controls transmission by monitoring such a facsimile communication control protocol as described above. That is, the system switches between the demodulated transmission and transmission by a speech codec for modem transmission. For example, in the case of communications between facsimile terminals that follows the T.30-defined standard procedure to perform the facsimile communication steps, the system controls the transmission to start the demodulated transmission after detecting the DIS signal from the receiving-side facsimile terminal as depicted in Fig. 11.

In the case of the nonstandard procedure, the detection of the NSS signal from the transmitting side, which indicates the start of the original protocol, is followed by stopping the demodulated transmission and then by switching to the transmission by the speech codec for modem transmission. This ensures normal transmission between facsimile terminals even in the case of the nonstandard procedure.

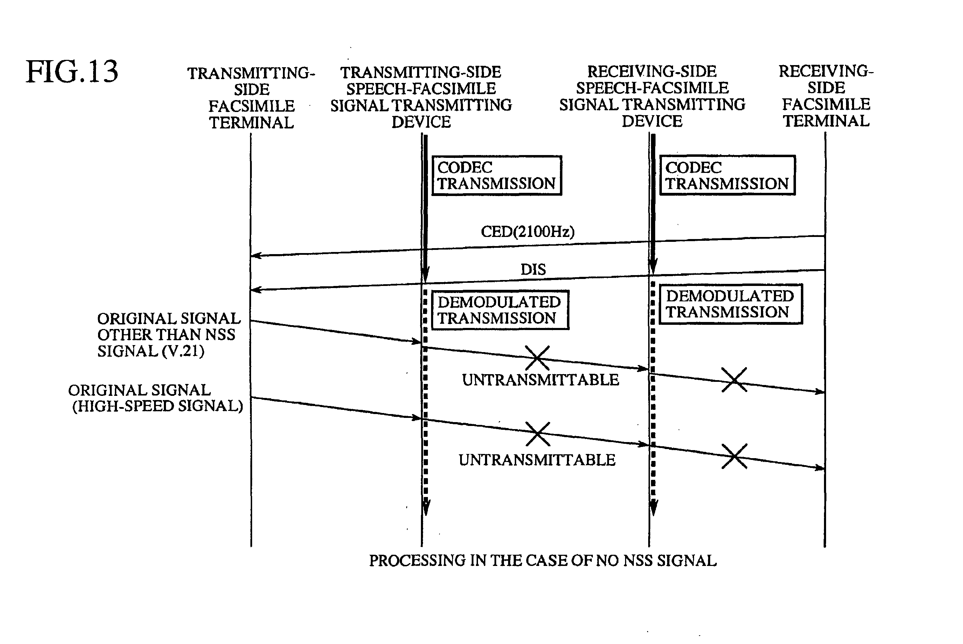

However, some facsimiles perform original protocol transmission without sending the NSS signal. With the method that detects the NSS signal and switches to the transmission by the speech codec for modem transmission, signals are still transmitted on a demodulated-transmission basis since no NSS signal is detected; in practice, however, the original protocol does not allow normal demodulated transmission and causes abnormal disconnection. Fig. 13 shows the transmission sequence in this case. Upon sending the DIS signal from the receiving-side facsimile terminal, the transmission system starts the demodulated transmission after detecting the DIS signal. When the transmitting-side facsimile terminal outputs an original signal in place of the NSS signal, the transmission system continues the demodulated transmission because it does not detect the NSS signal. As a result, the transmission system cannot transmit to the receiving-side facsimile terminal an original signal (high-speed signal) of the transmitting-side facsimile terminal based on the nonstandard procedure.

### DISCLOSURE OF THE INVENTION

The present invention is intended to solve such problems as referred to above, and has for its object to provide a speech-facsimile signal transmission method and a speech-facsimile signal transmission system that permit correct accomplishment of facsimile signal transmission by the T.30-defined standard procedure and facsimile signal transmission by the nonstandard procedure and allows normal transmission of an original protocol to facsimile equipment that adopts other original procedure, too.

To attain this objective, the speech-facsimile signal transmission method according to the present invention is adapted to make various kinds of decisions about a control signal added to a speech-facsimile signal for transmission. That is, the present invention is directed to a speech-facsimile signal transmission method in which a transmitting-side signal transmitting device, supplied with an input signal that is a mixture of a speech signal and a facsimile signal, transmits the input signal after facsimile demodulation or speech coding, and a receiving-side signal transmitting device receives the transmitted signal and performs facsimile modulation or speech decoding, by which the input signal is transmitted; after the receiving-side signal transmitting device sends a digital identification signal by the T.30-defined standard procedure, the transmitting-side signal transmitting device performs decision processing on a control signal added to the input signal. The decision processing comprises: a first signal decision step of making a check to determine whether the control signal is a nonstandard function setting signal; and a second signal decision step of making a check to determine whether the control signal is a predetermined control signal when it is decided in the first decision step that the control signal is not a nonstandard function setting signal. To determine whether the control signal is the predetermined control signal, a check is made to see if the control signal is a digital instruction signal, or whether the control signal is a T.30-defined signal. Further, this invention method is provided with a signal transmitting step of transmitting the input signal after speech coding if it is decided in the second signal decision step that the control signal is not the predetermined control signal. This constitution enables transmission of a speech signal after speech coding without making, in error, demodulated transmission of the facsimile signal from facsimile equipment that adopts an original procedure instead of outputting the nonstandard function setting signal which is the T.30-defined control signal. Further, the speech-facsimile signal transmission method according to the present invention may also be adapted to include a step of adding the signal to be transmitted as after being speech-coded as mentioned above with auxiliary information that the signal is a speech-coded signal. This enables the receiving-side signal transmitting device to correctly perform speech decoding of the transmitted signal on the basis of the auxiliary information without facsimile modulation.

The speech-facsimile signal transmitting system according to the present invention comprises: a facsimile signal demodulating part for facsimile-demodulating a trunk-side input signal that is a mixture of a speech signal and a facsimile signal; a speech coding part for speech-coding the trunk-side input signal; a demodulated transmission decision part for determining, based on a control signal added to the trunk-side input signal, whether the trunk-side input signal is to be input to the facsimile signal demodulating part or the speech coding part; and a transmitting part for switching, based on the decision by the demodulated transmission decision part, either the facsimile signal demodulating part or the speech coding part to send the demodulated facsimile signal or the speech-coded signal to the bearer side; in which the demodulated transmission decision part decides the inputting of the trunk-side input signal to the speech coding part when the control signal added to the trunk-side input signal is neither a nonstandard function setting signal nor a predetermined control signal after detecting a digital identification signal in the T.30-defined standard procedure from a bearer-side input signal. To determine whether the control signal is the predetermined control signal, the demodulated transmission decision part makes a check to see if the control signal is a digital command signal, or whether the control signal is a T.30-defined signal. This arrangement enables transmission of a speech signal after speech coding without making, in error, demodulated transmission of the facsimile signal from facsimile equipment that adopts an original procedure instead of outputting the nonstandard function setting signal which is the T.30-defined control signal. Further, the speech-facsimile signal transmission system according to the present invention may also be adapted to include an auxiliary information adding part in the transmitting part for adding the signal to be output from the speech coding part with auxiliary information that the signal is a speech-coded signal in the case where the demodulated transmission decision part decides the inputting of the trunk-side input signal to the speech coding part. This enables a receiving-side signal transmitting device to correctly perform speech decoding of the transmitted signal on the basis of the auxiliary information without facsimile modulation.

### BRIEF DESCRIPTION OF THE DRAWINGS

Fig. 1 is a block diagram illustrating the configuration of a speech-facsimile signal transmission system according to Embodiment 1 of the present invention.
Fig. 2 is a flowchart for explaining a decision process in a speech-facsimile signal transmission method according to Embodiment 1 of the present invention.
Fig. 3 is a schematic diagram for explaining the flow of signals in the speech-facsimile signal transmission system according to Embodiment 1 of the present invention.
Fig. 4 is a schematic diagram for explaining the flow of signals in the speech-facsimile signal transmission system according to Embodiment 1 of the present invention.
Fig. 5 is a schematic diagram for explaining the flow of signals in the speech-facsimile signal transmission system according to Embodiment 1 of the present invention.
Fig. 6 is a flowchart for explaining a decision process in a speech-facsimile signal transmission method according to Embodiment 2 of the present invention.
Fig. 7 is a schematic diagram for explaining the flow of signals in the speech-facsimile signal transmission system according to Embodiment 2 of the present invention.
Fig. 8 is a block diagram depicting an example of a conventional facsimile signal transmission system.
Fig. 9 is a schematic diagram for explaining the ITU-T T>30-defined FAX communication control procedure.
Fig. 10. is a schematic diagram for explaining an example of a facsimile communication control procedure original to a facsimile-equipment maker.
Fig. 11 is a schematic diagram for explaining a transmission process for performing steps for facsimile communication following the T.30-defined standard procedure.

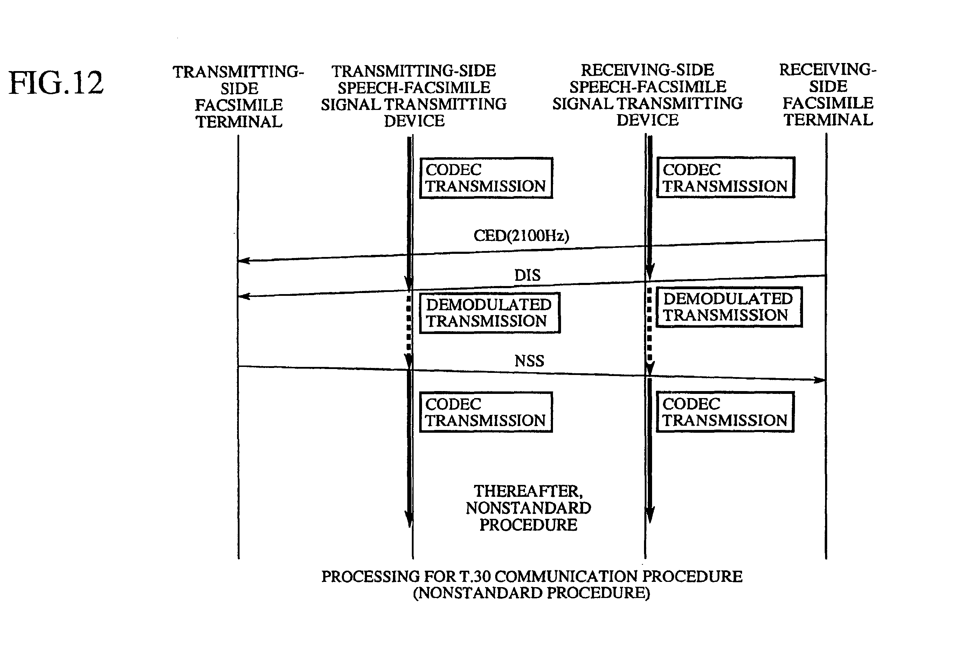

Fig. 12 is a schematic diagram for explaining a transmission process for performing steps for facsimile communication following the T.30-defined nonstandard procedure.
Fig. 13 is a schematic diagram for explaining a transmission process in the case of an original signal other than an NSS signal being sent.

### BEST MODE FOR CARRYING OUT THE INVENTION

### EMBODIMENT 1

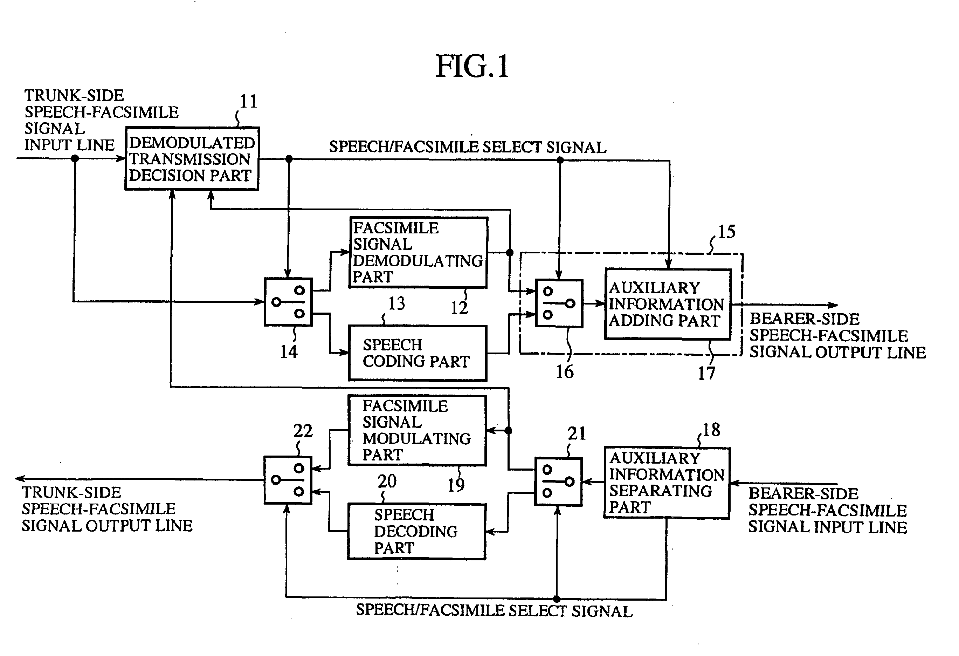

Fig. 1 is a block diagram illustrating a speech-facsimile signal transmission system according to Embodiment 1 of the present invention. In Fig. 1, a speech-facsimile signal, which is a mixture of telephone-related speech, a facsimile signal from a facsimile terminal and so forth, is input from the trunk side. DCME is equipment that is supplied, in general, with speech-facsimile signals of plural channels and transmits them in multiplexed form; for the sake of brevity for description, Fig. 1 shows an example of a system that performs processing on one speech-facsimile signal channel. Reference numeral 11 denotes a demodulated transmission decision part that determines whether a speech-facsimile signal input from a facsimile terminal on the trunk side is a V.21 signal or some other signal; and 12 denotes a facsimile signal demodulating part for demodulating a modulated facsimile signal; and 13 denotes a speech coding part. Reference numeral 14 denotes a selector for switching the flow of signals by a select signal based on the result of decision by the demodulated transmission decision part 11. Reference numeral 15 denotes a transmitting part that switches between the facsimile signal demodulating part 12 and the speech coding part 13 to output the signal to the bearer side. In the transmitting part 15, reference numeral 16 denotes a selector for switching the flow of signals by a select signal indicating an instruction based on the result of decision by the demodulated transmission decision part 11, and 17 denotes an auxiliary information adding part. In the receiving side, reference numeral 18 denotes an auxiliary information separating part for separating an auxiliary information signal added to an input signal from the bearer side; 19 denotes a facsimile signal modulating part for modulating a demodulated facsimile signal input from the bearer side; 20 denotes a speech decoding part; and 21 and 22 denote selectors for switching signals by a select signal based on the auxiliary information separated in the auxiliary information separating part 18.

A description will be given first of signal transmission processing at the transmitting side. The demodulated transmission decision part 11 decides whether the speech-facsimile signal from the trunk side is the V.21 signal or some other signal, and provides the result of decision to the selectors 14 and 16 and the auxiliary information adding part 15. To make a check to see if the speech-facsimile signal is the V.21 signal or not, it is necessary to analyze demodulated data of the signal demodulated in the facsimile signal demodulating part 12. To this end, the demodulated data from the facsimile signal demodulating part 12 is fed to the demodulated transmission decision part 11, wherein it is checked. The selector 14 provides the speech-facsimile signal from the trunk side to the facsimile signal demodulating part 12 or the speech coding part 13, depending on whether the speech-facsimile signal is decided by demodulated transmission decision part 11 to be the V.21 signal or some other signal. The facsimile signal demodulating part 12 demodulates the speech-facsimile signal, and outputs facsimile base band data to the selector 16. The speech coding part 13 performs speech coding of the speech-facsimile signal, and outputs coded data to the selector 16. Based on the result of decision by the demodulated transmission decision part 11, the selector 16 provides the input data from the facsimile signal modulating part 12 or the input data from the speech coding part 13 to the auxiliary information adding part 17. Based on the result of decision by the demodulated transmission decision part 11, the auxiliary information adding part 17 adds the input data from the selector 17 with auxiliary information indicating, for example, whether the data is the facsimile base band data or coded data, and outputs the data added with the auxiliary information to the bearer side.

Next, a description will be given of signal transmission processing at the receiving side. The auxiliary information separating part 18 separates auxiliary information of the speech-facsimile signal input from the bearer side, and uses the auxiliary information to determine whether the input speech-facsimile signal is facsimile base band data or coded data. Based on the result of decision, the auxiliary information separating part 18 provides a select signal to each of the selectors 21 and 22. The select signal is to instruct in which of signal processing circuits of the facsimile signal modulating part 19 and the speech decoding part 20 the speech-facsimile signal is to be processed. Further, the receiving-side demodulated data is input to the demodulated transmission decision part 11, which analyzes it and makes a decision on it. The selector 21 provides the speech-facsimile signal to the facsimile signal modulating part 19 or to the speech decoding part 20, depending on whether the speech-facsimile signal is decided by the auxiliary information separating part 18 as facsimile base band data or coded data. The facsimile signal modulating part 19 re-modulates the input facsimile base band data, and outputs it to the selector 22. Based on the decision result by the auxiliary information separating part 18, the selector 22 outputs the output signal from the facsimile signal modulating part 19 or the input signal from the speech decoding part 20.

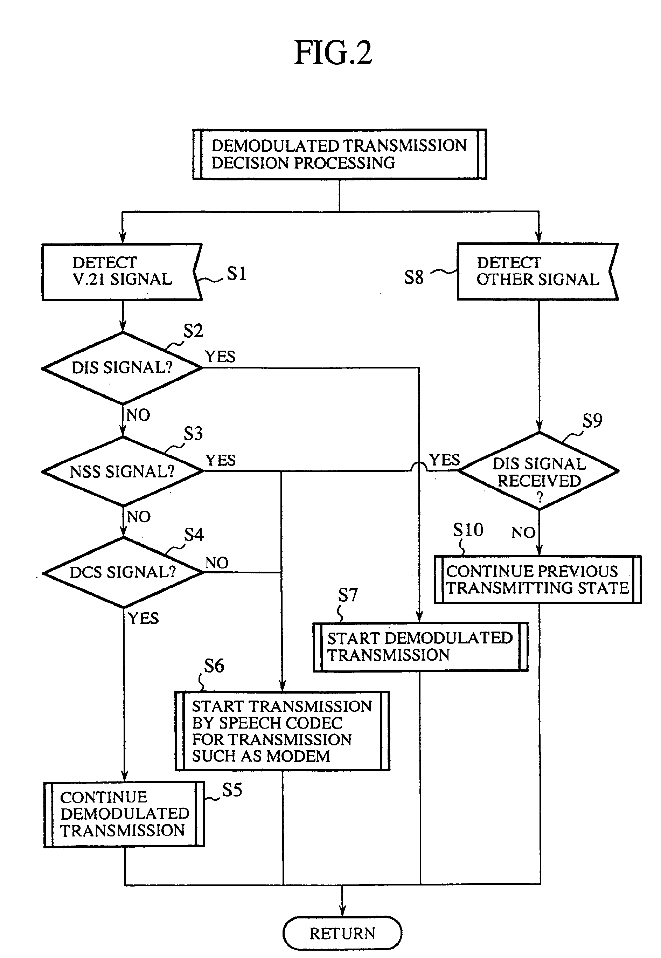

Fig. 2 is a flowchart for explaining the decision process in the speech-facsimile signal transmission method; more specifically, it is explanatory of the decision process of the demodulated transmission decision part 11 in Fig. 1. What is shown in Fig. 2 is a process for sending the digital identification signal DIS to the calling party and sensing its answer in the facsimile communication procedure. This process corresponds, in terms of the prior art, to the process for sending the digital command signal DCS from the transmitting-side facsimile equipment of the T.30-defined standard procedure in Fig. 9, or the process for sending the nonstandard function setting signal NSS from the transmitting-side facsimile equipment of the nonstandard procedure in Fig. 10. The operations by the flowchart of Fig. 2 are carried out by a signal processor under the control of a program stored in a memory.

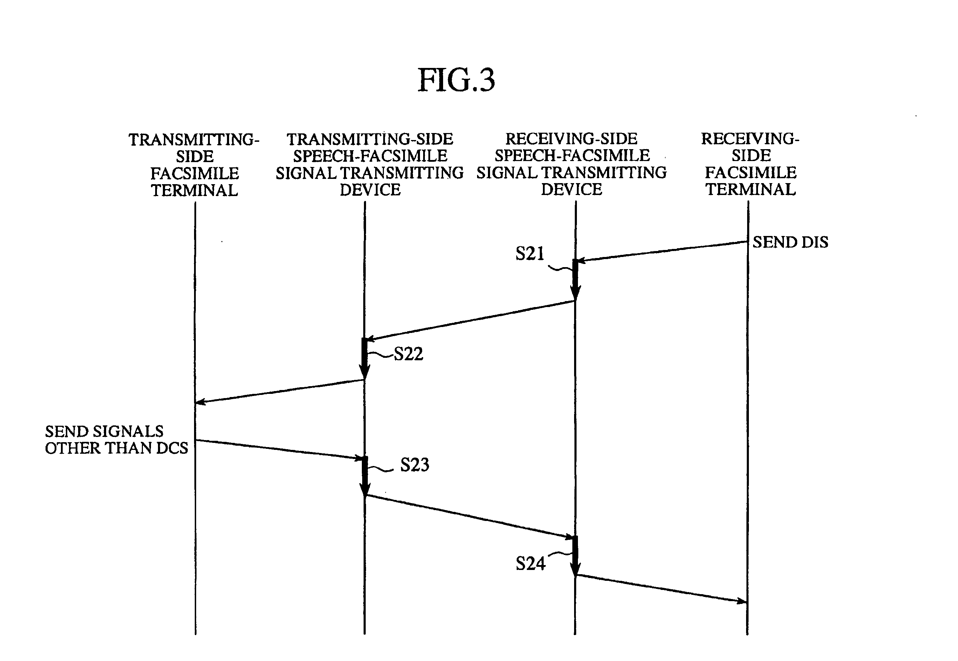

A description will be made of nonstandard-procedure transmission in the case where the transmitting-side facsimile terminal does not provide the nonstandard function setting signal SNN. That is, a description will be given of the case where the receiving-side facsimile equipment outputs the digital identification signal DIS and, in answer thereto, the transmitting-side facsimile equipment outputs the V.21 signal other than the digital command signal DCS and the nonstandard function setting signal NSS. Fig. 3 is a schematic diagram for explaining the flow of signals among the transmitting-side facsimile equipment, the transmitting-side speech-facsimile signal transmitting device, the receiving-side facsimile equipment and the receiving-side speech-facsimile signal transmitting device in the above-mentioned instance. In Fig. 3, step S21 shows a process that is carried out in the receiving-side speech-facsimile signal transmitting device when the receiving-side facsimile equipment output the DIS signal, step S22 shows a process in the transmitting-side speech-facsimile signal transmitting device, step S23 shows a process that is carried out in the transmitting-side speech-facsimile signal transmitting device when the transmitting-side facsimile equipment outputs a signal other than DCS signal, and step S24 shows a process in the receiving-side speech-facsimile signal transmitting device. A description will be given first of the processing corresponding to step S21 in Fig. 3. When supplied with the DIS signal, the receiving-side speech-facsimile signal transmitting device detects the V.21 signal in step S1 in Fig. 2, and decides in step S2 whether the input signal is the DIS signal or not. In this case, since the input signal is decided as the DIS signal in step S2, the receiving-side speech-facsimile signal transmitting device goes to step S7, starting demodulated transmission. Let it be assumed that the sending of the DIS signal from the receiving-side facsimile equipment is followed by sending from the transmitting-side facsimile equipment a V.21 signal that is neither the NSS nor DCS signal. At this time, the demodulated transmission decision processing shown in Fig. 2 is carried out which corresponds to step S23 in Fig. 3. In step S1 in Fig. 2 the transmitting-side speech-facsimile signal transmitting device detects the V.21 signal, and then goes to step S3 since the decision in step S2 is that the input signal is not the DIS signal. Since the decision in step S3 is that the detected signal is not the NSS signal, the transmitting-side speech-facsimile signal transmitting device goes to step S4. Since the signal is not the DCS signal in step S4, the transmitting device proceeds to step S6, starting transmission by the speech codec for transmission such as a modem. That is, based on such decisions as mentioned above, the demodulated transmission decision part 11 outputs a select signal to the selector 14 so that the speech-facsimile signal to be input to the trunk side is provided to the speech coding part 13, and the selector 14 outputs the signal to the speech coding part 13 accordingly. In the subsequent communication between facsimiles, even in the case of the nonstandard procedure, normal transmission can be achieved since the transmitting devices transmit signals via the route of the speech codec such as a modem..

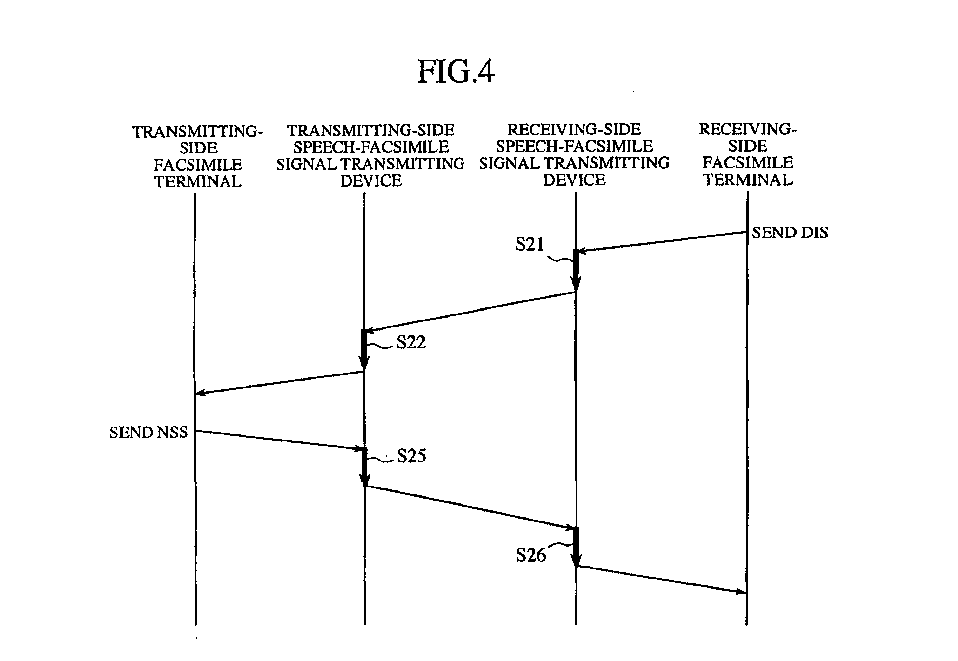

Next, a description will be given of the nonstandard procedure for the transmitting-side facsimile equipment to send the NSS signal. Fig. 4 is a schematic diagram for explaining the flow of signals in this instance. In Fig. 4, the steps of the same numbers as those in Fig. 3 are common in processing to the corresponding steps in Fig. 3. In Fig. 4, step S25 shows a process that is carried out in the speech-facsimile signal transmitting device when the transmitting-side facsimile equipment sends the NSS signal, and step S26 shows a process in the receiving-side speech-facsimile signal transmitting device. In the demodulated transmission decision process in Fig. 2 corresponding to step S25, the transmitting-side speech-facsimile signal transmitting device detects the V.21 signal in step S1, and proceeds to step S3 since the decision in step S2 is that the detected signal is not the DIS signal. Since in step S3 the input signal is decided to be the NSS signal, the transmitting-side speech-facsimile signal transmitting device goes to step S6, starting transmission by the speech codec for transmission such as a modem. In the subsequent communication between facsimiles, even in the case of the nonstandard procedure, normal transmission can be achieved since the transmitting devices transmit signals via the route of the speech codec such as a modem.

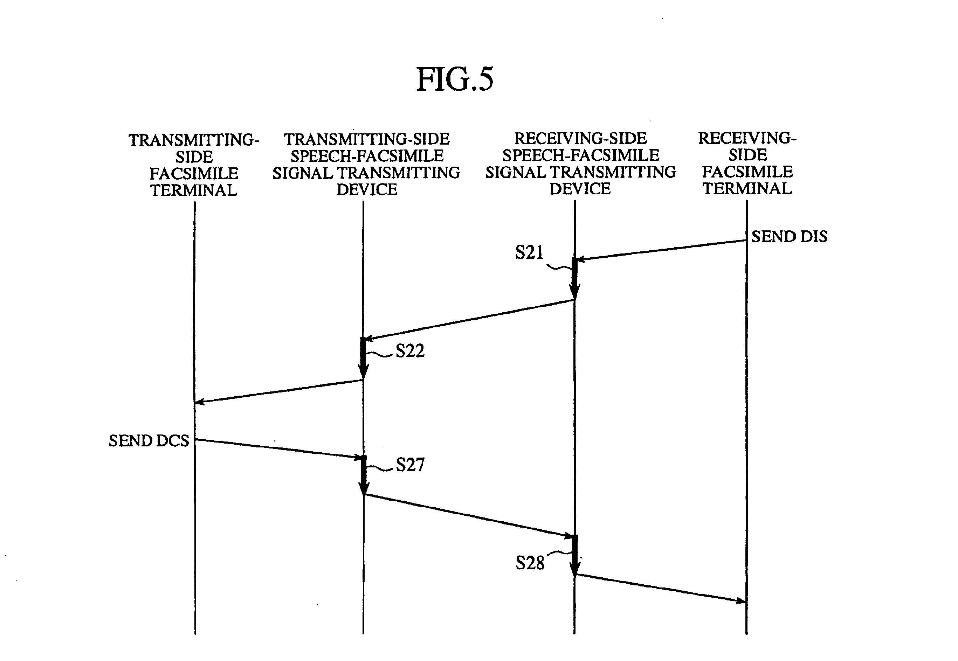

Next, the T.30-defined standard procedure will be described below. Fig. 5 is a schematic diagram for explaining the flow of signals in this instance. In Fig. 5, the steps of the same numbers as those in Fig. 3 are common in processing to the corresponding steps in Fig. 3. In Fig. 5, step S27 shows a process that is carried out in the speech-facsimile signal transmitting device when the transmitting-side facsimile equipment sends the DCS signal, and step S26 shows a process in the receiving-side speech-facsimile signal transmitting device. In the demodulated transmission decision process in Fig. 2 corresponding to step S27, the transmitting-side speech-facsimile signal transmitting device detects the V.21 signal in step S1 and proceeds to step S3 since the decision in step S2 is that the detected signal is the DIS signal. Since in step S3 the input signal is not the NSS signal, the transmitting-side speech-facsimile signal transmitting device goes to step S4. Since in step S4 the signal is decided to be the DCS signal, the transmitting device proceeds to step S5, continuing the demodulated transmission.

Next, a description will be given of the case where the receiving-side facsimile equipment sends the DIS signal and then the transmitting-side facsimile equipment sends a signal other than the V.21 signal. In this case, the transmitting-side speech-facsimile signal transmitting device detects the signal in step S8 in Fig. 2, and goes to step S9. Since the transmitting-side speech-facsimile signal transmitting device has received the DIS signal, it goes to step S6 in response to the decision result in step S9, starting transmission by the speech codec for transmission such as a modem. When the transmitting-side speech-facsimile signal transmitting device has not received the DIS signal, it proceeds to step S10 according to the result of decision in step S9 and remains in the previous state of transmission.

### EMBODIMENT 2

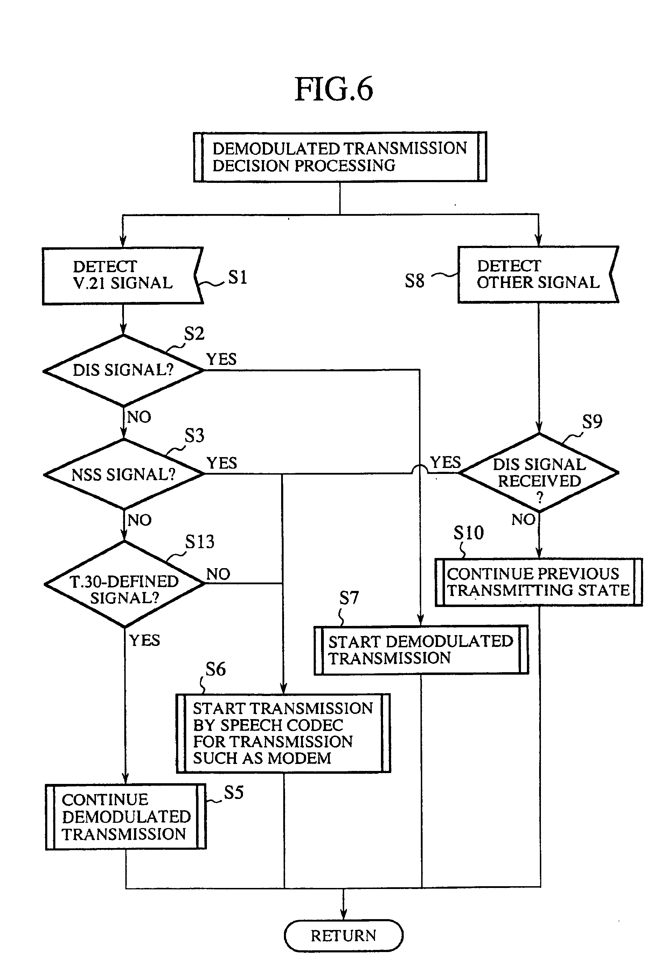

Fig. 6 is a flowchart for explaining a decision process of a speech-facsimile signal transmitting system according to Embodiment 2 of the present invention. Fig. 6 is a flowchart for explaining a decision process of the demodulated transmission decision part 8 in Fig. 1. The process depicted in Fig. 6 corresponds to the process for sending the digital identification signal DIS to the calling party and sending an answer thereto in the facsimile communication procedure. This process corresponds, in terms of the prior art, to the process in which the transmitting-side facsimile equipment sends the digital command signal DCS of the T.30-defined standard procedure in Fig. 9. In Fig. 6, the steps of the same number as those in Fig. 2 are common in processing to the corresponding steps in Fig. 2. Step S13 is to decide whether the input V.21 signal is a T.30-defined signal.

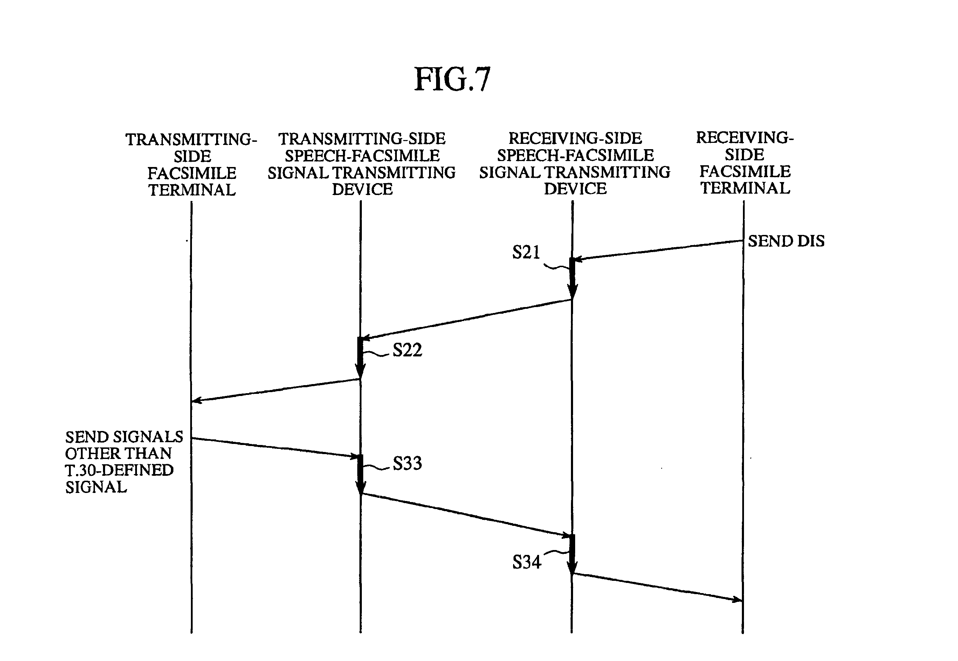

A description will be given of the case where the receiving-side facsimile equipment outputs the DIS signal and the transmitting-side facsimile equipment answers it by outputting a signal that is not the T.30-defined signal. Fig. 7 is a schematic diagram for explaining the flow of signal among the transmitting-side facsimile equipment, the transmitting-side speech-facsimile signal transmitting device, the receiving-side facsimile equipment and the receiving-side speech-facsimile signal transmitting device in this case. In Fig. 7 the steps of the same number as those in Fig. 3 common in processing to the corresponding steps in Fig. 3. Step S21 in Fig. 7 is the same as described previously in respect of Embodiment 1. A description will be made of the decision process in Fig. 6 that corresponds to step S21 in Fig. 7. When supplied with the DIS signal, the receiving-side speech-facsimile signal transmitting device detects the V.21 signal in step S1 in Fig. 6, and in step S2, decides whether the input signal is the DIS signal or not. In this instance, since the input signal is decided to be the DIS signal in step S2, the receiving-side speech-facsimile signal transmitting device proceeds to step S7, starting demodulated transmission. Assume that the sending of the DIS signal from the receiving-side facsimile equipment is followed by sending from the transmitting-side facsimile equipment from a signal that is not the T.30-defined signal. In Fig. 7, step S33 indicates the process that is carried out in the transmitting-side speech-facsimile signal transmitting device when it is supplied with the non-T.30-defined signal from the transmitting-side facsimile equipment, and step S34 is the process in the receiving-side speech-facsimile signal transmitting device. In the demodulated transmission decision process in Fig. 6 that corresponds to step S33, the transmitting-side speech-facsimile signal transmitting device detects the V.21 signal in step S1, and goes to step S3 since the decision in step S2 is that the input signal is not the DIS signal. Since it is decided in step S3 that the signal is not the NSS signal, the transmitting-side speech-facsimile signal transmitting device proceeds to step S13. Further, since it is decided in step S13 that the signal is not the T.30-defined signal, the transmitting-side speech-facsimile signal transmitting device goes to step S6, starting transmission by the speech codec for transmission such as a modem. That is, based on such decisions sa mentioned above, the demodulated transmission decision part 11 provides a select signal to the selector 14 that the speech-facsimile signal to be input to the trunk side is fed to the speech coding part 13, and the selector 14 outputs the signal to the speech coding part 13 accordingly. In the subsequent communications between the facsimiles, since the transmitting devices transmit signal via the route of the speech codec for transmission such as a modem, it is possible to avoid an abnormal disconnection or similar situations even in the case of non-T.30-defined signals.

The decision process steps by the nonstandard procedure and by the T.30-defined procedure in the case where the transmitting-side facsimile equipment sends the NSS signal are the same as the decision process steps by the nonstandard procedure and by the V.21-defined procedure in the case where the transmitting-side facsimile equipment sends the NSS signal as described previously with reference to Embodiment 1.

## Claims

1. A speech-facsimile signal transmission method in which a transmitting-side signal transmitting device, supplied with an input signal that is a mixture of a speech signal and a facsimile signal, transmits said input signal after its facsimile demodulation or speech coding, and a receiving-side signal transmitting device receives the transmitted signal and performs facsimile modulation or speech decoding of said transmitted signal, by which said input signal is transmitted, **characterized by**: a first signal decision step of deciding whether a control signal added to said input signal is a nonstandard function setting signal, in said transmitting-side signal transmitting device after said receiving-side signal transmitting device sends a digital identification signal by a T.30-defined standard procedure; a second signal decision step of deciding whether said control signal is a predetermined control signal when it is decided in said first signal decision step that said control signal is not a nonstandard function setting signal; and a signal transmission step of transmitting said input signal after its speech coding when it is not in said second signal decision sep that said control signal is not a predetermined control signal.

2. The speech-facsimile signal transmission method according to claim 1, **characterized in that** said second signal decision step is a step of deciding whether said control signal is a digital instruction signal.

3. The speech-facsimile signal transmission method according to claim 1, **characterized in that** said second signal decision step is a step of deciding whether said control signal is a T.30-defined signal.

4. The speech-facsimile signal transmission method according to claim 1, **characterized in that** said signal transmission step is a step of transmitting said input signal after performing speech coding of said input signal and adding said input signal with auxiliary information indicating that said input signal is a speech-coded signal in the case where it is decided in said second signal decision step that said control signal is not a predetermined control signal.

5. A speech-facsimile signal transmission system **characterized by**: a facsimile signal demodulating part for facsimile-demodulating a trunk-side input signal that is a mixture of a speech signal and a facsimile signal; a speech coding part for speech-coding said trunk-side input signal; a demodulated transmission decision part for deciding, based on a control signal added to said trunk-side input signal, whether said trunk-side input signal is to be input to said facsimile signal demodulating part or said speech coding part; and a transmitting part for switching, based on the decision by said demodulated transmission decision part, either said facsimile signal demodulating part or said speech coding part to send said demodulated facsimile signal or said speech-coded signal to the bearer side; in which said demodulated transmission decision part decides the input of said trunk-side input signal to said speech coding part in the case where said control signal added to said trunk-side input signal is neither a nonstandard function setting signal nor a predetermined control signal after detecting a digital identification signal in the T.30-defined standard procedure from a bearer-side input signal.

6. The speech-facsimile signal transmission system according to claim 5, **characterized in that** said demodulated transmission decision part decides the inputting of said trunk-side input signal to said speech coding part in the case where said control signal added to said trunk-side input signal is neither a nonstandard function setting signal nor a digital command signal after detecting said digital identification signal in the T.30-defined standard procedure from said bearer-side input signal.

7. The speech-facsimile signal transmission system according to claim 5, **characterized in that** said demodulated transmission decision part decides the inputting of said trunk-side input signal to said speech coding part in the case where said control signal added to said trunk-side input signal is neither a nonstandard function setting signal nor a T.30-defined signal after detecting said digital identification signal in the T.30-defined standard procedure from said bearer-side input signal.

8. The speech-facsimile signal transmission system according to claim 5, **characterized in that** said transmission part is provided with an auxiliary information adding part for adding said signal to be output from said speech coding part with auxiliary information that said output signal is a speech-coded signal in the case where it is decided by said demodulated transmission decision part that said trunk-side input signal is input to said speech coding part.
